# EUROPEAN PATENT APPLICATION

(11) **EP 1 435 749 A1**
(43) Date of publication of application: **07.07.2004**
(21) Application number: 02360383.0
(22) Date of filing: 30.12.2002
(51) Int. Cl.: H04Q 7/38

(54) **Location based call barring**

(71) Applicant: EVOLIUM S.A.S., 75008 Paris (FR)
(72) Inventor: Allerborn, Wilhelm, Dipl.-Ing., 71254 Ditzingen (DE); Egler, Wolfgang, Dr., 70734 Fellbach (DE); Berg, Markus, Dipl.-Ing., 70176 Stuttgart (DE); Ebmeyer, Jürgen, Dipl.-Ing., 70619 Stuttgart (DE)
(74) Representative: Dreiss, Fuhlendorf, Steimle & Becker

(57) **Abstract**

Disclosed are network elements (30, 40, 44) involved in the transmission of service requests between a mobile access terminal (20) of a first category assigned to a communication network (24), and the communication network (24), the network elements (30, 40, 44) imposing location dependent restrictions on service requests concerning said mobile access terminal (20), the locations being covered by said mobile communication network (24). The network elements are characterized in that the network elements (30, 40, 44) bar forwarding service requests to or from the mobile access terminal (20) when the position of the mobile access terminal (20) is in a predetermined area (38).

## Description

The present invention relates to Network elements involved in the transmission of service requests (i.e. mobile originating calls (MOC) or terminating calls (MTC), short messages, etc.) between a mobile access terminal of a first category assigned to a communication network, and the communication network, the network elements imposing location dependent restrictions on service requests concerning said mobile access terminal, the locations being covered by said mobile communication network.

Further, the present invention relates to a method of imposing location based restrictions on service requests of a mobile access terminal of a first category assigned to a mobile communication network, the locations being covered by said mobile communication network.

Such network elements and such a method are known from EP 891 110 A1.

According to this document, mobile stations like handsets could cause disturbance at electronic equipment, thereby endangering human lifes in a sensitive environment. To avoid such disturbances, the use of mobile access terminals like mobile phones is sometimes not allowed at certain places, for example inside planes during parts of a flight and inside hospitals. To prevent being dependent upon the user's decency, the possible use of said handset could be deactivated by transmitting a deactivation signal from a base station to the handset, which deactivation signal either only deactivates said use for a predefined time-interval, or deactivates said use all the time until an activation signal originating from said base station has been received by said handset.

However, in order to obey such a deactivation signal, the mobile access terminals need a particular design, which has not been implemented up to now. Accordingly, all mobile access terminals that are presently in use would not follow such a deactivation signal, thereby rendering the function useless for the lifetime of the existing mobile access terminals.

Further, each and every future mobile access terminal had to show the particular design, thereby increasing manufacturing expenditure.

Even further, since the functionality would at least partially be located in the mobile access terminal, manipulations and malfunctions of relatively few concerned mobile access terminals may affect the usefulness of such a functionality adversely.

It is in view of the prior art outlined above the objective of the invention to provide for a functionality that prevents a mobile access terminal from causing disturbance, that does not rely on a particular design of the mobile access terminal, thereby, also including older mobile access terminals that are already in use, and that is less prone to manipulation and malfunction.

These objective is achieved by network elements as mentioned at the outset, wherein the network elements bar forwarding service requests to or from the mobile access terminal when the position of the mobile access terminal is in a predetermined area.

Further, these objectives are achieved by a method as mentioned at the outset, the method comprising the step of barring forwarding service requests to or from the mobile access terminal when the position of the mobile access terminal is in a predetermined area.

The Location Based Call Barring according to the invention allows to bar all service requests (i.e. mobile originating calls (MOC) or terminating calls (MTC), short messages, etc.) of a mobile access terminal if this mobile access terminal is roaming in a predetermined or pre-defined area, hereafter also referred-to as the barred area. Thereby, possible disturbances of a mobile access terminal at sensitive locations can be effectively avoided. It is an important advantage of the inventive functionality that even the utilization of mobile phones that are already in use will be affected, since the new functionality applies to each and every standard compliant mobile phone.

The inventive functionality applies to all mobile subscribers roaming in the barred area, with the exception of specific subscribers or categories of subscribers as described below. Specific subscribers may have an "override category" in their profile, i.e. they are allowed to override location based call barring. There may be an exception list (mobile subscribers who are exempted from barring, e.g. police, fire brigades, priority subscribers, a specific subscriber class, or a list of specific individual subscribers).

In order to facilitate implementation, the network elements comprise preferably a mobile switching center MSC, a gateway mobile location center GMLC and, facultatively, a service control point SCP.

It is this combination of network elements that allow for an implementation of the inventive functionality without establishing a need for additional equipment.

Recent cellular systems include location service LCS and related technologies, and many architectures, protocols and procedures are still in development, such as logical LCS architecture, signalling protocol and interfaces, network location procedures and positioning procedures. The LCS referred to in accordance with the present invention is logically implemented on the GSM structure through the addition of one network node, the Gateway Mobile Location Center GMLC. However, the invention is not limited to the GSM structure and may be implemented in other network architectures like UMTS, CDM.... The Gateway Mobile Location Center GMLC used in GSM contains functionality required to support LCS.

It is, particularly, preferred that the mobile communication network comprises at least two cells and that at least one of said cells overlaps said predetermined area.

Accordingly, the "barred area" can be within one cell, or it can belong to two or more cells. It can also be part of more than one location area, which may be controlled by one or more BSCs and even MSCs. Hence, the borders of a barred area need not match the borders of a cell.

Preferably, when the mobile access terminal is in one of the overlapping cells, the mobile access terminal's location is determined using standard positioning methods to achieve a position information of decreased resolution, thus enabling the network elements to check whether the mobile access terminal is in the predetermined area or not.

As a resulting advantage it is not mandatory for the network to obtain highly resolved position data permanently for a potentially large number of mobile access terminals roaming inside a cell and, therefore, being potentially present at the barred area. Instead, the highly resolved localization is only implemented when needed. Hence, potential strain on the system resulting from establishing position data for a plurality of mobile access terminals at a time can be avoided. Since the accuracy of the position determination depends also on the capabilities of the concerned mobile access terminal, an exact localization might be difficult. If only a low accuracy is available (or only the Cell-ID can be determined e.g. for old mobiles), the wider area (up to the whole cell) may be barred or, alternatively, barring does not take place, depending on service options.

It is, further, preferred that the barring of forwarding service requests is activated and/or deactivated by an instance (client), e.g. deactivated by a client via said gateway mobile location center GMLC, which checks and confirms or refuses the client's respective authority.

It is, even further, preferred, that said gateway mobile location center GMLC activates a cell based intelligent network IN trigger in the network elements.

This feature allows a more subscriber dependent implementation.

Additionally, it is preferred, that the predetermined area is subscriber specific.

A subscriber specific location barring offers additional advantages like enhanced privacy at home and less disturbance at work, if desired. Such a functionality would apply to a specific subscriber who has subscribed to this service. The barring may depend on the called party number in case of mobile originated calls or on the calling party number in case of mobile terminated calls, date and time. Such a functionality could be designated as a location based call screening. As an example, mobile terminating calls may be inhibited from specified parties (e.g. no business calls when at home). Alternatively, mobile terminating calls are only allowed from specified parties (e.g. only business calls when at work, except calls from specified party). In other words: Business related calls could be barred when the subscriber is at home. Likewise, only work-related calls could be forwarded to an office.

Since service requests to or from a mobile access terminal can be particularly disturbing at a church, a cinema, a graveyard, a hospital, a theatre, an opera, a school and/or a restaurant, it is preferred hat the predetermined area is the area of at least one of these locations.

It is, further, preferred to implement the method such that the above mentioned effects of the above mentioned network elements appear.

Further advantages can be taken from the description and the enclosed drawings.

It is to be understood that the features mentioned above and those yet to be explained below can be used not only in the respective combinations indicated, but also in other combinations or in isolation, without leaving the scope of the present invention.

Embodiments of the invention are shown in the drawings and will be explained in more detail in the description below. In the drawings:
- Fig. 1: shows, schematically, a barred area overlapping cells of a mobile communication network;
- Fig. 2: depicts, schematically, a first example scenario for implementing the present invention;
- Fig. 3: shows, also schematically, a second example scenario for implementing the present invention;
and
- Fig. 4: depicts a third example scenario of the present invention, also in schematic form.

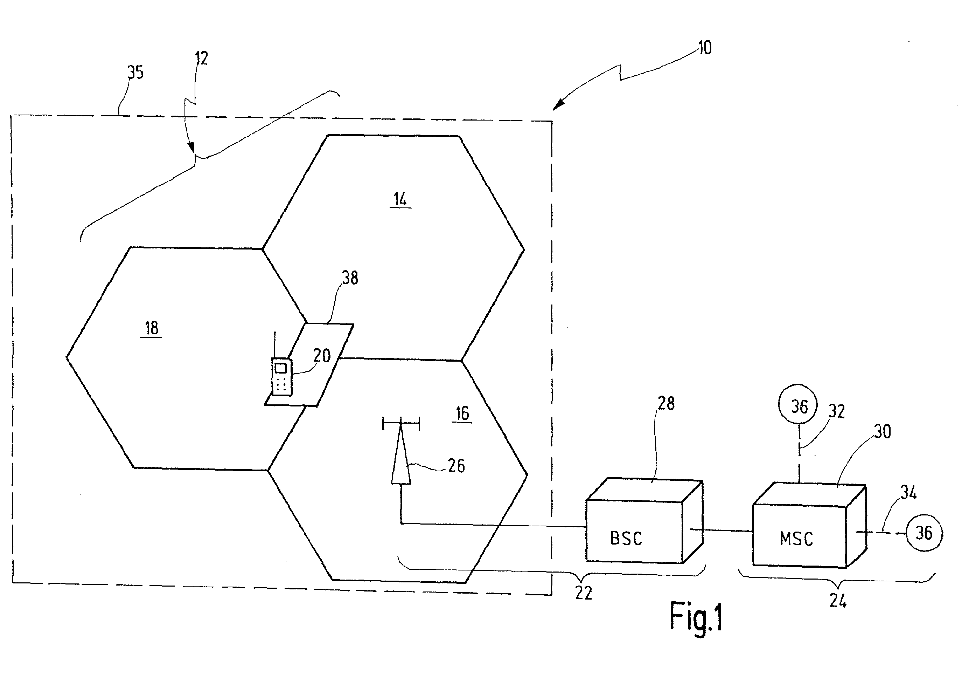

In Figure 1, a mobile communication system is designated in its entirety by identification reference 10. Mobile communication system 10 covers a cluster 12 of cells, each cell being defined by the range of coverage of a respective transceiver. In Figure 1, cells 14, 16 and 18 are part of cluster 12 that is covered by mobile communication system 10. In general, however, cluster 12 of mobile communication system 10 covers a significantly larger number of cells.

In general, mobile communication system 10 may be divided into three subsystems, namely into a mobile system 20, a base station system 22 and a network and switching system 24. Mobile system 20 is embodied by any mobile access terminal, e.g. by a mobile phone. The base station system 22 connects the mobile switching center with several mobile systems 20, although only one mobile system 20 is shown in Figur 1. The base station system 22 comprises a transmitter and a receiver in a base transceiver station BTS 26, and a base station controller BSC 28. Base station controller 28 handles, inter alia, the handover between several cells that are controlled by the concerned base station controller 28. Each base station system 22 comprises only one base station controller 28 but, in general, several base transceiver stations 26. Again, only one BTS 26 is depicted, ass being representative for a plurality of BTSs

The network and switching system 24 switches, on the one hand, radio links in the GSM over great distances, e.g. between subscribers in different countries and, on the other hand, radio links between mobile subscribers in GSM and other networks like PSDN and ISDN. The mobile switching center 30 forms the center component of a network and switching system 24. Mobile switching center 30 switches between several connected base station systems 28. Further, mobile switching center 30 is connected to other network elements 36, e.g. other mobile switching centers. Dashed lines 32, 34 represent such connections. As is generally known, a mobile switching center 30 is connected to four data bases, namely to a home location register HLR, to a authentication center AOC, to a visitor location register VLR and, to an equipment identity register EIR.

The HLR administers the mobile subscribers that are allocated to a certain network and switching system. The HLR stores the locations of the allocated mobile systems/subscribers as well as the services that may be utilized by a particular subscriber. The VLR contains information concerning the locations of mobile subscribers that are not allocated to a particular network and switching system, but that are temporarily located in an area covered by the particular network and switching system.

In Figure 1, identification reference 38 designates a pre-defined area in which all service requests of a mobile system 20 should be barred, if the mobile system 20 is roaming in the pre-defined area 38. Accordingly, pre-defined area 38 may also be designated as a barred area 38. Barred area 38 may, for instance, be a church, a cinema, a grave yard, a hospital, a theatre, an opera, a school and/or a restaurant. However, this enumeration is meant to list examples only and, therefore, not meant to be complete. Instead, barred area 38 may be allocated to each area, in which service requests to or from a mobile system 20 roaming in barred area 38 would be potentially disturbing.

Of course, the barring of service requests may take place only temporarily. For instance, service requests may be barred during a presentation in a cinema, theatre, etc. or during a funeral, when the barred area 38 is a grave yard. As is generally known, the term service request may relate to mobile originating calls (MOC) or terminating calls (MTC) and/or short messages, etc. of a mobile station 20.

The barring of service requests is controlled by the mobile switching center 30 which blocks all service requests of a mobile system 20 which is roaming in the barred area 38. Barred area 38 may be within one cell or may overlap with two or more cells. It can also be part of more than one location area 35, which may be controlled by one or more base station controllers and mobile switching centers.

If a mobile system 20 requests a service request (MOC, MTC,...) while roaming in one of the concerned cells, the location of the mobile system 20 is determined, using standard positioning methods. In figure 1, barred area 38 overlaps cells 14, 16 and 18. Accordingly, these cells are concerned. In other words, if a mobile system 20 roaming in one of these cells requests a service, the location of that particular mobile system 20 is determined with a higher resolution in order to be able to check whether mobile system 20 is within barred area 38 or not. If the position of mobile system 20 is within barred area 38, the service request of mobile system 20 is denied.

The location determination (location estimate) may be performed by a position calculation function located in the mobile system 20 or in the network 24. Position calculation functions a per se known. See, for instance, third generation partnership project; technical specification 03.71 V8.7.0 (2002-09). Further relevant 3GPP standards are: TS36PP20.071, Location Services (LCS), Service Description, Stage 1; TS 36PP23.071, Functional Stage 2 Description of Location Services. According to the specification mentioned first, several position calculation functionalities exist. This specification mentions four position calculation functionalities, abbreviated as TA (timing advance between a mobile station and its serving base transceiver station), TOA (time of arrival position mechanism, E-OTD (enhanced observed time difference) and GPS (global positioning system positioning mechanism).

For example, in the E-OTD, the mobile system measures relative time of arrival of the signals from several base transceiver stations. The position of the mobile station is then determined by deducing the geometrical components of the time delays to a mobile station from the base transceiver station. Measurements are performed by the mobile station without any additional hardware. For more details, references is made to the above mentioned specifications, which are incorporated by reference herein. It should be noted, that the invention relates to a functionality of location based call barring rather than to a particular functionality of determining a location.

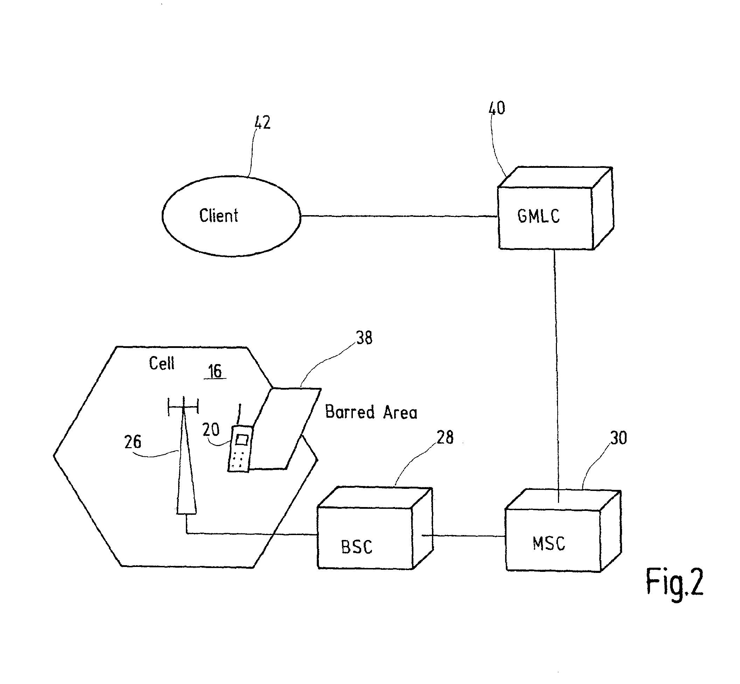

Figure 2 shows, schematically, a first example scenario for implementing the present invention. In this first example scenario, the mobile switching center 36 of figure 1 communicates with a gateway mobile location center 40, which is connected to a client 42. The gateway mobile location center GMLC 40 contains functionality required to support localizations. In one public land mobile network PLMN, there may be more than one GMLC. The barring functionality can be activated/deactivated by client 42 via GMLC 40. The authorization of client 42 to activate the barring is verified by the GMLC. The GMLC contains the relevant data like:
The clients which are authorized to activate the location based barring;
the related area description (e.g. geographic coordinates);
the allowed service options (e.g. an exception list).

The exception list may comprise mobile subscribers who are exempted from barring, e.g. the police, fire brigades, priority subscribers or a list of specific individual subscribers. Except for these exempted subscribers, the barring functionality applies to all mobile subscribers roaming in the barred area. Specific subscribers may have an override category in their profile enabling them to override location based call barring. In the first example scenario according to figure 2 client 42 activates location based call barring via GMLC 40. GMLC 40 then verifies the authorization of client 42 and determines the related cells. The related cells may include cell 16 in figure 2. Afterwards, GMLC 40 activates the service in the related mobile switching center 36. Mobile switching center 36 stores a list of the concerned cells, which include, in the example shown in figure 2, cell 16.

After being activated, a location based call barring may be invocated by a mobile subscriber roaming in one of the concerned cells. For instance, mobile system 20 tries to originate a call or receive a mobile a terminating call. Cell 16, in which mobile system 20 is roaming, is known to the mobile switching center 36. Mobile switching center 36 determines that a barred area 38 belongs to this cell 16. Accordingly, mobile switching center 36 initiates a position determination concerning mobile system 20.

As has already been mentioned, standard position determination methods as disclosed in the above mentioned 3GPP specifications may be used. Once the position of mobile system 20 in cell 16 is known, mobile switching center 30 sends the position data and the relevant mobile system 20 data to GMLC 40.

The relevant mobile system 20 data include all data that is relevant for barring determination, e.g. the identity of the subscriber, potentially an override category, etc. GMLC 40 than checks whether mobile system 20 is within barred area 38 or not, and checks whether the call shall be barred or not. The result is given back to mobile switching center 30, which than denies or allows the call accordingly.

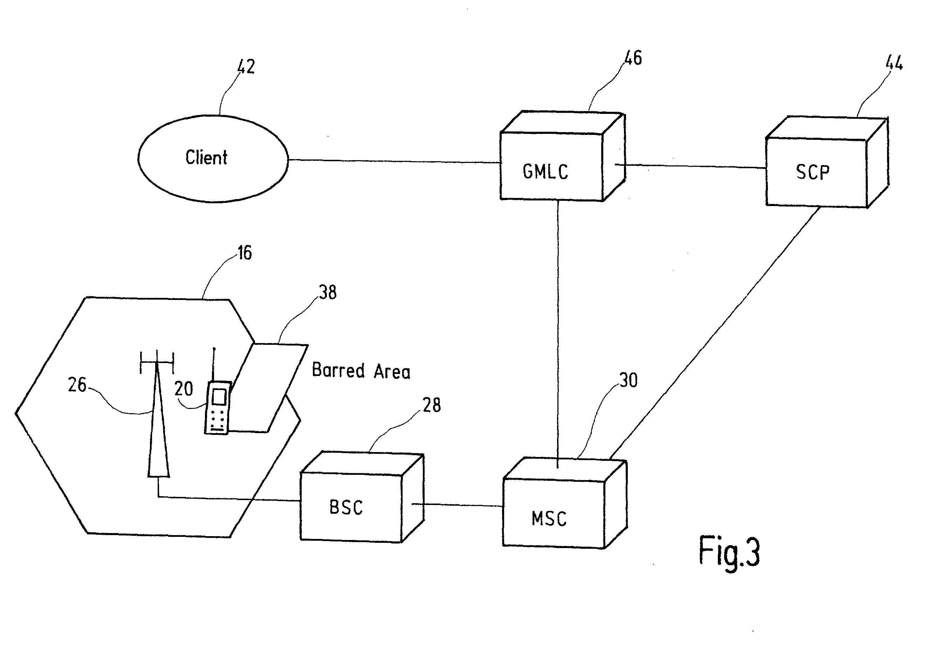

In the second example scenario according to figure 3, an additional service control point 44 is provided. Figure 3 represents an intelligent network (IN) based solution, in which the barring condition is verified by the service control point SCP44. This method allows a more subscriber dependant behaviour. In telecommunication systems, the intelligent network (IN) architecture, in which subscriber services are stored as service logics in a service node (SCP), is the preferred way to provide enhanced subscriber services.

IN services are defined by the service provider who loads the service logics into a service logic data base in a service node such as a service control point 11.

In the structure of figure 3, client 42 activates a location based a call barring via GMLC 40, which verifies the authorization of client 42 and determines the related cells. Than, GMLC 40 activates a cell based IN trigger in the related mobile switching center 30. Mobile switching center 30 activates the cell based IN trigger. The service is also activated in service control point 44. As an alternative, the service activation may also be implemented directly in service control point 44, without involvement of GMLC 40.

Afterwards the activated service may be invocated by a subscriber (mobile system 20) roaming in one of the concerned cells, e.g. cell 16, by trying to originate a call or receiving a mobile termination call. In this case, mobile switching center 30 determines that a cell based IN trigger is activated for this cell. Accordingly, mobile switching center 30 triggers an IN service towards service control point 44. Service control point 44 requests a position of mobile system 20 via GMLC 40, using a standard positioning method. The position result is then returned to service control point 44 via GMLC 40. Service control point 44 decides whether the call is allowed or must be denied. The result is given back from service control point 44 to mobile switching center 40. Accordingly, mobile switching center 30 denies or allows the call.

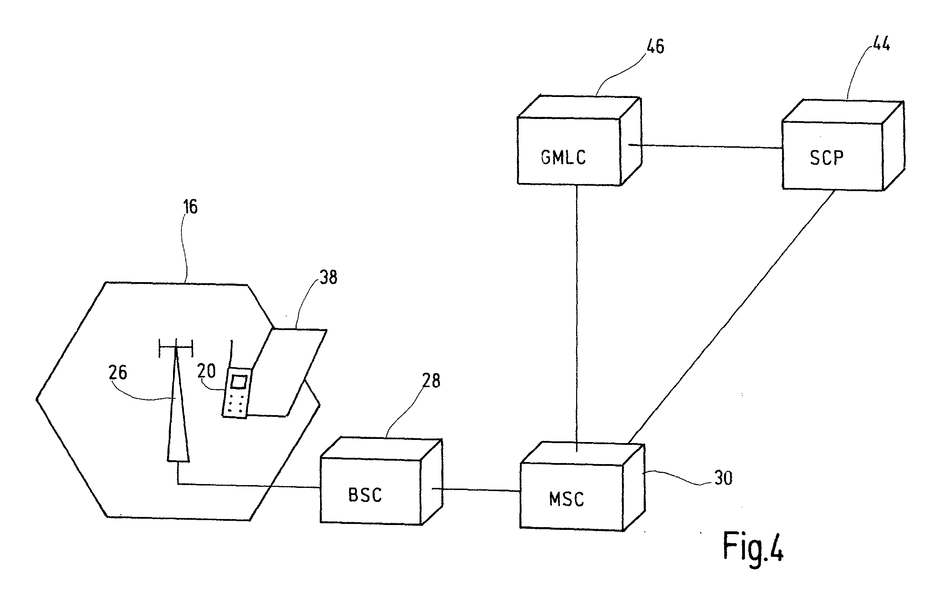

In figure 4, a fourth example scenario is depicted, in which a subscriber specific location call barring is implemented. In the structure of figure 4, the location based call barring/screening-service is activated in service control point 44 by the subscriber himself. This may be done by a standard service user interaction tools, for instant via the internet, WAP, SMS, etc. The authorization of the subscriber is checked by a service control point 44. Service control point 44 than activates the subscriber specific IN trigger in mobile switching center 30.

If not activated, the IN service is triggered for all calls of the respective subscriber. After having been activated, the location based call barring may be invocated by the concerned subscriber trying to originate a call or receiving a mobile a terminating call. Mobile switching center 30 than triggers an IN service toward service control point 44. In response, service control point 44 requests the position of mobile system 20, that is the mobile system allocated to the concerned subscriber, via GMLC 40 using standard position methods as outlined above. The position result is than returned to service control point 44 via GMLC 40. Service control point 44 than decides whether the call is allowed or as to be denied. The respective result is than given back from service control point 44 to mobile switching center 30. Mobile switching center 30 denies or allows the call accordingly.

## Claims

1. Network elements (30, 40, 44) involved in the transmission of service requests between a mobile access terminal (20) of a first category assigned to a communication network (24), and the communication network (24), the network elements (30, 40, 44) imposing location dependent restrictions on service requests concerning said mobile access terminal (20), the locations being covered by said mobile communication network (24), **characterized in that** the network elements (30, 40, 44) bar forwarding service requests to or from the mobile access terminal (20) when the position of the mobile access terminal (20) is in a predetermined area (38).

2. The network elements (30, 40, 44)of claim 1, **characterized by** comprising a mobile switching center MSC (30), a gateway mobile location center GMLC (40) and, facultatively, a service control point SCP (44).

3. The network elements (30, 40, 44) of claim 2, **characterized in that** the communication network (24) comprises at least two cells (14, 16, 18) and that at least one of said cells (14, 16, 18) overlaps said predetermined area (38).

4. The network elements (30, 40, 44) of claim 3, **characterized in that**, when the mobile access terminal (20) is in one of the overlapping cells (14, 16, 18), the mobile access terminal's (20) location is determined using standard positioning methods to achieve a position information of higher resolution, enabling the network elements (30, 40, 44) to check whether the mobile access terminal (20) is in the predetermined area (38) or not.

5. The network elements (30, 40, 44) of claim, **characterized in that** the barring of forwarding service requests is activated and/or deactivated by an instance (client) (42), e.g. deactivated by a client (42) via said gateway mobile location center GMLC (40), which checks and confirms or refuses the client's (40) respective authority.

6. The network elements of claim 5, **characterized in that** said the gateway mobile location center GMLC (40) activates a cell based intelligent network IN trigger in the network elements (30, 40, 44).

7. The network elements (30, 40, 44) of claim 7, **characterized in that** the predetermined area (38) is subscriber specific.

8. The network elements (30, 40, 44) of claim 1, **characterized in that** said predetermined area (38) is the area of at least one of a church, a cinema, a graveyard, a hospital, a theatre, an opera, a school and/or a restaurant.

9. Method of imposing location based restrictions on service requests of a mobile access terminal (20) of a first category assigned to a communication network (24), the locations being covered by said communication network (24), **characterized by** the step of barring forwarding service requests to or from the mobile access terminal (20) when the position of the mobile access terminal (20) is in a predetermined area (38).

10. The method of claim 9, **characterized by** handling the network elements (30, 40, 44) of any of claims 2 to 7 such that the effects featured in these claims appear.
